(19) Europäisches Patentamt
European Patent Office
Office européen des brevets

(11) **EP 3 331 175 A1**

(12) **EUROPÄISCHE PATENTANMELDUNG**

(43) Veröffentlichungstag:
**06.06.2018  Patentblatt 2018/23**

(51) Int Cl.:
**H04B 10/80** (2013.01)

(21) Anmeldenummer: **17200494.7**

(22) Anmeldetag: **08.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **30.11.2016  DE 102016123070**

(71) Anmelder: **Miele & Cie. KG**
**33332 Gütersloh (DE)**

(72) Erfinder: **Giesbrecht, Valerij**
**33034 Brakel (DE)**

(54) **SCHALTUNGSANORDNUNG ZUR OPTISCHEN SIGNALÜBERTRAGUNG**

(57)  Die Erfindung betrifft eine Schaltungsanordnung (1) zur optischen Signalübertragung mit einem Optokoppler (10), welcher ausgebildet ist, einen Eingangsstrom (IF) zu erhalten und einen Ausgangsstrom (IC) zu erzeugen. Die Schaltungsanordnung (1) zur optischen Signalübertragung ist gekennzeichnet durch einen Transimpedanzverstärker (12), welcher ausgebildet ist, den Ausgangsstrom (IC) des Optokopplers (10) zu erhalten und eine zum Ausgangsstrom (IC) des Optokopplers (10) proportionale Ausgangsspannung (USIG) zu erzeugen.

FIG. 4

EP 3 331 175 A1

**Beschreibung**

Die Erfindung betrifft eine Schaltungsanordnung zur optischen Signalübertragung gemäß dem Oberbegriff des Patentanspruchs 1 sowie ein elektrisches Gerät gemäß Patentanspruch 10 mit einer derartigen Schaltungsanordnung zur optischen Signalübertragung.

Im Bereich der Elektronik sind verschiedene Anwendungen bekannt, bei denen zwei oder mehr voneinander elektrisch isolierte Schaltkreise verwendet werden, zwischen denen Signale übertragen werden müssen. Häufig sind vergleichsweise schnelle digitale Signale zu übertragen, wie z.B. bei der Datenübertragung über ein Bus-System.

Diese elektrisch isolierte Signalübertragung innerhalb eines Schaltkreises kann beispielsweise mittels Optokopplern realisiert werden. Ein Optokoppler ist ein Bauelement der Optoelektronik und dient zur Übertragung eines Signals zwischen zwei galvanisch getrennten Stromkreisen. Der Optokoppler besteht üblicherweise aus einer Leuchtdiode (LED) oder aus einer Laserdiode (LD) als optischem Sender und einer Photodiode oder einem Fototransistor als optischem Empfänger. Das Sende- und das Empfängerbauelement sind üblicherweise miteinander optisch gekoppelt in einem von außen lichtundurchlässigen Gehäuse untergebracht. Mit Optokopplern können sowohl digitale als auch analoge Signale übertragen werden.

Um die Signale sicher, d.h. sicher erkennbar, zu übertragen, sollte darauf geachtet werden, dass die Verzögerungen der positiven und der negativen Flanken möglichst gleich lang sind, wobei die absolute Verzögerungszeit kaum relevant ist. Diese Anforderung gilt auch bei der Übertragung von Puls-Pausen-modulierten Signalen, wie sie z.B. für die Ansteuerung von IGBTs (Bipolartransistor mit isolierter Gate-Elektrode; englisch: insulated-gate bipolar transistor) oder für das Einlesen von Sensordaten verwendet werden.

Um diese Anforderungen hinsichtlich der Qualität der Signalübertragung über einen Optokoppler zu erfüllen und gleichzeitig eine möglichst schnelle Taktfrequenz des Schaltkreises erreichen zu können, können zur Übertragung schneller Signale derzeit spezielle Hochgeschwindigkeits-Optokoppler wie z.B. der Optokoppler SFH6345 von Vishay Intertechnology, Inc., eingesetzt werden.

Nachteilig ist hierbei, dass derartige Hochgeschwindigkeits-Optokoppler einen vergleichsweise hohen Bauteilpreis aufweisen können. Dies kann sich besonders dann auf die Kosten der Schaltungsanordnung nachteilig auswirken, falls dieser Optokoppler mindestens zweimal pro Schaltkreis verbaut wird, um eine bidirektionale Kommunikation zu ermöglichen.

Der Erfindung stellt sich somit das Problem, eine Schaltungsanordnung zur optischen Signalübertragung bereitzustellen, welche eine möglichst sichere und bzw. oder eine möglichst schnelle Signalübertragung bei geringeren Bauteilkosten als bisher bekannt ermöglichen kann. Insbesondere soll eine möglichst sichere und gleichzeitig möglichst schnelle Signalübertragung bei geringeren Bauteilkosten als bisher bekannt ermöglicht werden. Dies soll insbesondere für eine digitale Signalübertragung ermöglicht werden. Zumindest soll eine Alternative zu bekannten Schaltungsanordnungen zur optischen Signalübertragung geschaffen werden.

Erfindungsgemäß wird dieses Problem durch eine Schaltungsanordnung zur optischen Signalübertragung mit den Merkmalen des Patentanspruchs 1 sowie durch ein elektrisches Gerät mit den Merkmalen des Patentanspruchs 10 gelöst. Vorteilhafte Ausgestaltungen und Weiterbildungen der Erfindung ergeben sich aus den nachfolgenden Unteransprüchen.

Die vorliegende Erfindung betrifft somit eine Schaltungsanordnung zur optischen Signalübertragung mit einem Optokoppler, welcher ausgebildet ist, einen Eingangsstrom zu erhalten und einen Ausgangsstrom zu erzeugen. Derartige Optokoppler sind bekannt, um galvanisch getrennte Schaltungen signalübertragend miteinander zu verbinden. Damit diese Signalübertragung schnell und sicher erfolgen kann, werden üblicherweise Hochgeschwindigkeits-Optokoppler verwendet, was zu entsprechenden Kosten führen kann.

Die erfindungsgemäße Schaltungsanordnung zur optischen Signalübertragung ist gekennzeichnet durch einen Transimpedanzverstärker bzw. Spitzenwertgleichrichter, welcher ausgebildet ist, den Ausgangsstrom des Optokopplers zu erhalten und eine zum Ausgangsstrom des Optokopplers proportionale Ausgangsspannung zu erzeugen. Dabei liegt der vorliegenden Erfindung die Erkenntnis zugrunde, dass die Geschwindigkeit von Optokopplern unter anderem dadurch eingeschränkt sein kann, dass Spannungsänderungen am Ausgang des Optokopplers zu Umladeströmen führen können. Dies kann nun erfindungsgemäß dadurch reduziert oder sogar vollständig vermieden werden, indem die Ausgangsspannung des Optokopplers mit Hilfe eines Transimpedanzverstärkers konstant gehalten werden kann. Der Transimpedanzverstärker gibt hierzu eine zum Ausgangsstrom des Optokopplers proportionale Spannung aus.

Auf diese Weise lässt sich die Geschwindigkeit langsamer Optokoppler wesentlich erhöhen, so dass langsamere und kostengünstigere Optokoppler verwendet werden können, deren Verhalten durch den Transimpedanzverstärker wieder beschleunigt werden kann. Hierdurch lassen sich die Kosten der Schaltungsanordnung reduzieren, ohne die Geschwindigkeit der Signalübertragung zu sehr bzw. überhaupt zu reduzieren.

Gemäß einem Aspekt der vorliegenden Erfindung weist die Schaltungsanordnung zur optischen Signalübertragung einen Optokoppler-Treiber auf, welcher ausgebildet ist, den Eingangsstrom des Optokopplers kontinuierlich zu erzeugen. Auf diese Weise kann ein Ein- und Ausschalten der Lichtquelle und des Lichtempfängers des Optokopplers vermieden werden, weil diese Vorgänge jeweils mehr Zeit beanspruchen können als eine reine Veränderung des Eingangsstroms des Optokopplers und eine entsprechende Helligkeitsanpassung des ausgesendeten Lichtsignals des Optokopplers.

Mit anderen Worten kann die maximale Geschwindigkeit der Signalübertragung der Schaltungsanordnung dadurch weiter verbessert werden, indem die Optokoppler-LED nicht je nach Signalzustand ein- oder ausgeschaltet, sondern kontinuierlich bestromt wird. Lediglich die Stromstärke wird in Abhängigkeit von dem Eingangssignal variiert. Dadurch können zeitraubende Umladeprozesse in der LED und in dem Photosensor minimiert oder sogar vollständig vermieden werden.

Gemäß einem weiteren Aspekt der vorliegenden Erfindung ist der Optokoppler-Treiber ferner ausgebildet, einen maximalen Eingangsstrom des Optokopplers, welcher einer logischen 1 entspricht, und einen minimalen Eingangsstrom des Optokopplers, welcher einer logischen 0 entspricht, zu erzeugen. Auf diese Weise können digitale Signale über den Optokoppler übertragen werden, ohne dass der Eingangsstrom des Optokopplers unterbrochen werden muss, was sich aus den zuvor beschriebenen Gründen vorteilhaft auf die Geschwindigkeit der Signalübertragung der Schaltungsanordnung auswirken kann.

Gemäß einem weiteren Aspekt der vorliegenden Erfindung ist der Optokoppler-Treiber ferner ausgebildet, den Eingangsstrom des Optokopplers derart zu erzeugen, dass der maximale Eingangsstrom des Optokopplers in einem konstanten Verhältnis mit einem konstanten Faktor zum minimalen Eingangsstrom des Optokopplers steht. Diese Eigenschaft kann sich vorteilhaft auf weitere Schritte der Verarbeitung des Ausgangsstroms des Optokopplers auswirken, wie im Folgenden noch beschrieben werden wird.

Gemäß einem weiteren Aspekt der vorliegenden Erfindung weist die Schaltungsanordnung zur optischen Signalübertragung einen Spitzenwertgleichrichter auf, welcher ausgebildet ist, die Ausgangsspannung des Transimpedanzverstärkers zu erhalten und eine Ausgangsspannung zu erzeugen, welche dem Maximum oder dem Minimum der Ausgangsspannung des Transimpedanzverstärkers entspricht. Auf diese Weise kann, je nach Verschaltung, der Maximal- oder Minimalwert der Ausgangsspannung des Transimpedanzverstärkers ermittelt und weiterverarbeitet werden.

Gemäß einem weiteren Aspekt der vorliegenden Erfindung weist die Schaltungsanordnung ein P-Glied (Proportional-Glied) auf, welches ausgebildet ist, die Ausgangsspannung des Spitzenwertgleichrichters zu erhalten und als Ausgangsspannung einen Mittelwert der Ausgangsspannung des Transimpedanzverstärkers zu erzeugen. Diese Ausgangsspannung kann als Referenzspannung zur weiteren Verarbeitung des Ausgangsstroms des Optokopplers verwendet werden.

Gemäß einem weiteren Aspekt der vorliegenden Erfindung weist das P-Glied ein Übertragungsverhältnis von etwa

$$1 + K/(2 * K)$$

auf, wobei K ein konstanter Faktor eines Optokoppler-Treibers ist. Mittels dieses oder eines vergleichbaren Übertragungsverhältnisses kann die zuvor beschriebene Erzeugung einer Referenzspannung erfolgreich erfolgen.

Gemäß einem weiteren Aspekt der vorliegenden Erfindung ist der konstante Faktor des Optokoppler-Treibers größer als 1 und kleiner als 2, vorzugsweise kleiner als 1,5, besonders vorzugsweise kleiner als 1,25. Insbesondere in diesen Wertebereichen kann die zuvor beschriebene Erzeugung einer Referenzspannung erfolgreich erfolgen. Dabei ist die erzeugte Referenzspannung umso genauer, je enger der Bereich des konstanten Faktors gewählt wird, d.h. desto kleiner die obere Grenze des konstanten Faktors ist.

Gemäß einem weiteren Aspekt der vorliegenden Erfindung weist die Schaltungsanordnung zur optischen Signalübertragung eine Komparatorschaltung auf, welche ausgebildet ist, die Ausgangsspannung des Transimpedanzverstärkers und die Ausgangsspannung eines P-Glieds zu erhalten und eine Ausgangsspannung der Schaltungsanordnung zu erzeugen. Auf diese Weise kann, in Relation zu dem Referenzsignal, die Ausgangsspannung des Transimpedanzverstärkers in ein Rechtecksignal umgewandelt werden, welches bis auf eine zeitliche Verschiebung und bis auf einen evtl. geänderten Logikpegel weitgehend dem Eingangssignal der Schaltungsanordnung zur optischen Signalübertragung entspricht. Wegen der mittigen Lage des Pegels des Referenzsignals können sowohl die positive und als auch die negative Flanke um denselben Wert verzögert werden, so dass die Signalform der Ausgangsspannung der Schaltungsanordnung zur optischen Signalübertragung identisch zur Eingangsspannung der Schaltungsanordnung zur optischen Signalübertragung bleiben kann. Auf diese Weise kann eine optische Signalübertragung mit einem kostengünstigeren Optokoppler in vergleichbarer oder sogar besserer Qualität erfolgen.

Die vorliegende Erfindung betrifft auch ein elektrisches Gerät mit wenigstens einer Schaltungsanordnung zur optischen Signalübertragung wie zuvor beschrieben. Auf diese Weise können die Vorteile einer entsprechenden Schaltungsanordnung bei einem elektrischen Gerät genutzt werden.

Gemäß einem Aspekt der vorliegenden Erfindung ist das elektrische Gerät ein elektrisches Haushaltsgerät, insbesondere:

- ein Backofen mit Funkspieß,
- ein Funkspieß für einen Backofen;
- ein Dampfgarer,
- ein Dampfgarer mit Mikrowelle,
- ein Combi-Dampfgarer,
- ein Combi-Dampfgarer mit Backofenfunktion,

- ein Combi-Dampfgarer mit Funkspieß,
- ein Funkspieß für einen Combi-Dampfgarer,
- ein Combi-Dampfgarer mit Backofenfunktion und Funkspieß,
- ein Funkspieß für einen Combi-Dampfgarer mit Backofenfunktion, und bzw. oder
- ein Einbau-Kaffeeautomat.

Ein Ausführungsbeispiel der Erfindung ist in den Zeichnungen rein schematisch dargestellt und wird nachfolgend näher beschrieben. Es zeigt

Figur 1     einen detaillierten Schaltungsplan einer bekannten Schaltungsanordnung zur optischen Signalübertragung;

Figur 2     die Spannungsverläufe einer Eingangsspannung und einer Ausgangsspannung der Schaltungsanordnung zur optischen Signalübertragung der Figur 1 für einen ersten Wert eines Pull-Up-Widerstands über der Zeit;

Figur 3     die Spannungsverläufe einer Eingangsspannung und einer Ausgangsspannung der Schaltungsanordnung zur optischen Signalübertragung der Figur 1 für einen zweiten Wert des Pull-Up-Widerstands über der Zeit;

Figur 4     einen prinzipiellen Schaltungsplan einer erfindungsgemäßen Schaltungsanordnung zur optischen Signalübertragung;

Figur 5     einen detaillierten Schaltungsplan der erfindungsgemäßen Schaltungsanordnung zur optischen Signalübertragung der Figur 4;

Figur 6     den detaillierten Schaltungsplan der erfindungsgemäßen Schaltungsanordnung zur optischen Signalübertragung der Figur 5 in einer anderen Darstellung;

Figur 7     die Spannungsverläufe einer Eingangsspannung und einer Ausgangsspannung der erfindungsgemäßen Schaltungsanordnung zur optischen Signalübertragung der Figur 6 für einen ersten Wert eines Stromübertragungsfaktors über der Zeit; und

Figur 8     die Spannungsverläufe einer Eingangsspannung und einer Ausgangsspannung der erfindungsgemäßen Schaltungsanordnung zur optischen Signalübertragung der Figur 6 für einen zweiten Wert des Stromübertragungsfaktors über der Zeit.

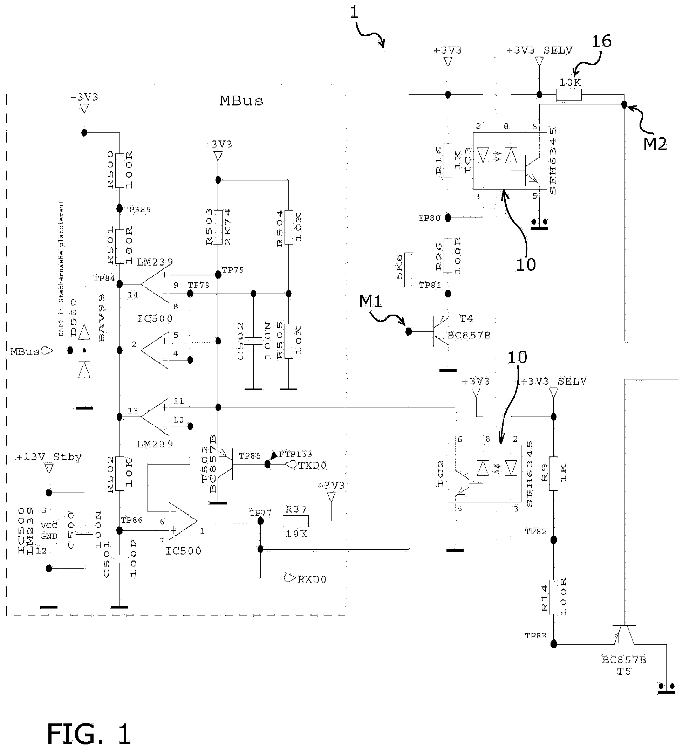

Figur 1 zeigt einen detaillierten Schaltungsplan einer bekannten Schaltungsanordnung 1 zur optischen Signalübertragung. Die Schaltungsanordnung 1 wird in der dargestellten Form für eine galvanisch getrennte MBus-Kommunikation verwendet. Dies kann beispielsweise eine Funkspieß-Kommunikation oder eine NPC-Kommunikation zur Triac-Ansteuerung sein. Die Schaltungsanordnung 1 weist zwei Optokoppler 1 auf, welche der bidirektionalen Kommunikation dienen. Der obere Optokoppler 1 weist ausgangsseitig einen Pull-Up-Widerstand 16 auf.

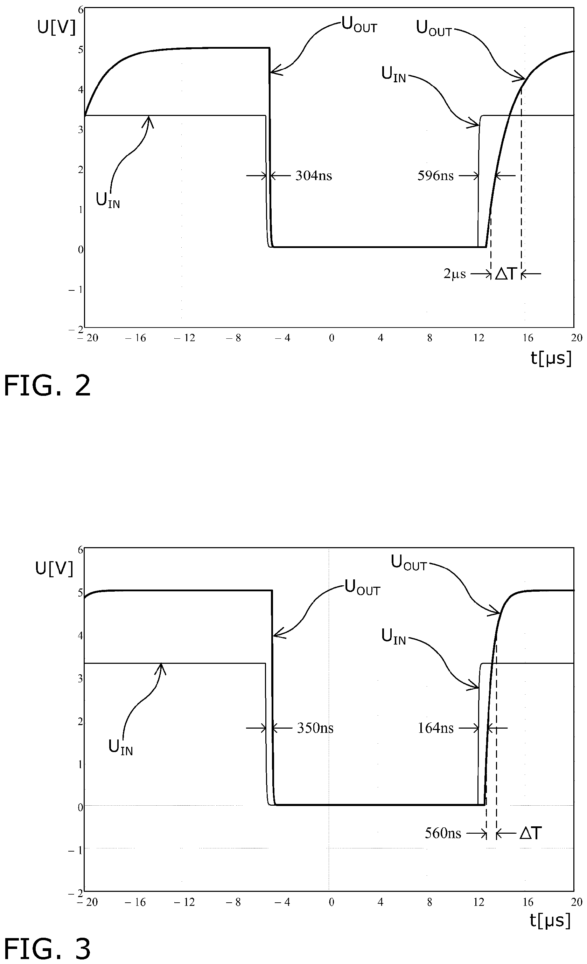

Hierbei wird als Optokoppler 1 ein Optokoppler-Bauteil SFH6345 von Vishay Intertechnology, Inc., eingesetzt. Dieser weist als Hochgeschwindigkeits-Optokoppler eine schnelle und sichere Signalübertragung auf, wie in den Figuren 2 und 3 gezeigt wird. So zeigt Figur 2 die Spannungsverläufe U einer Eingangsspannung $U_{IN}$ und einer Ausgangsspannung $U_{OUT}$ der Schaltungsanordnung 1 zur optischen Signalübertragung der Figur 1 für einen ersten Wert eines Pull-Up-Widerstands 16 über der Zeit t und die Figur 3 eine entsprechende Darstellung für einen zweiten Wert des Pull-Up-Widerstands 16. Dabei wird die Eingangsspannung $U_{IN}$ an einem Messpunkt M1 und die Ausgangsspannung $U_{OUT}$ an einem Messpunkt M2 erfasst.

In beiden Messungen der Figuren 2 und 3 sind die Verzögerungen zwischen der Eingangsspannung $U_{IN}$ und der Ausgangsspannung $U_{OUT}$ absolut betrachtet sehr gering. Bei der Verwendung des Pull-Up-Widerstands 16 mit einem ohmschen Widerstand von 10 k$\Omega$ liegen diese bei 304 ns bei den fallenden Flanken der Spannungen $U_{IN}$ und $U_{OUT}$ und bei 596 ns bei den steigenden Flanken der Spannungen $U_{IN}$ und $U_{OUT}$, siehe Figur 2. Bei der Verwendung des Pull-Up-Widerstands 16 mit einem ohmschen Widerstand von 2 k$\Omega$ liegen diese bei 350 ns bei den fallenden Flanken der Spannungen $U_{IN}$ und $U_{OUT}$ und bei 164 ns bei den steigenden Flanken der Spannungen $U_{IN}$ und $U_{OUT}$, siehe Figur 3.

In der Figur 2 zeigt sich jedoch für die Verwendung des Pull-Up-Widerstands 16 mit einem ohmschen Widerstand von 10 k$\Omega$, dass die ansteigende Flanke der Ausgangsspannung $U_{OUT}$ sehr flach ist, was für die Datenübertragung kritisch werden kann, wenn die Schwellspannung eines RxD-Moduls an der oberen Toleranzgrenze liegt. Die Anstiegszeit $\Delta T$ der ansteigenden Flanke der Ausgangsspannung $U_{OUT}$ beträgt ca. 2 $\mu$s. Dabei bezieht sich die angegebene Anstiegszeit auf die Zeit, in welcher das Signal der Ausgangsspannung $U_{OUT}$ von 20% auf 80% des End-Pegels ansteigt. Wird für den Pull-Up-Widerstand 16 ein ohmscher Widerstand von 2 k$\Omega$ verwendet, kann der Anstieg der Flanke deutlich verbessert werden, d.h. die Anstiegszeit kann deutlich reduziert werden, wie in der Figur 3 zu sehen ist.

In jedem Fall wird mit dem Optokoppler-Bauteil SFH6345 ein Optokoppler 1 verwendet, welcher vergleichsweise teuer ist. Hierdurch kann zwar eine schnelle und sichere Signalübertragung erreicht werden, jedoch lediglich zu entsprechenden Kosten, was für viele Anwendungsfälle unerwünscht sein kann.

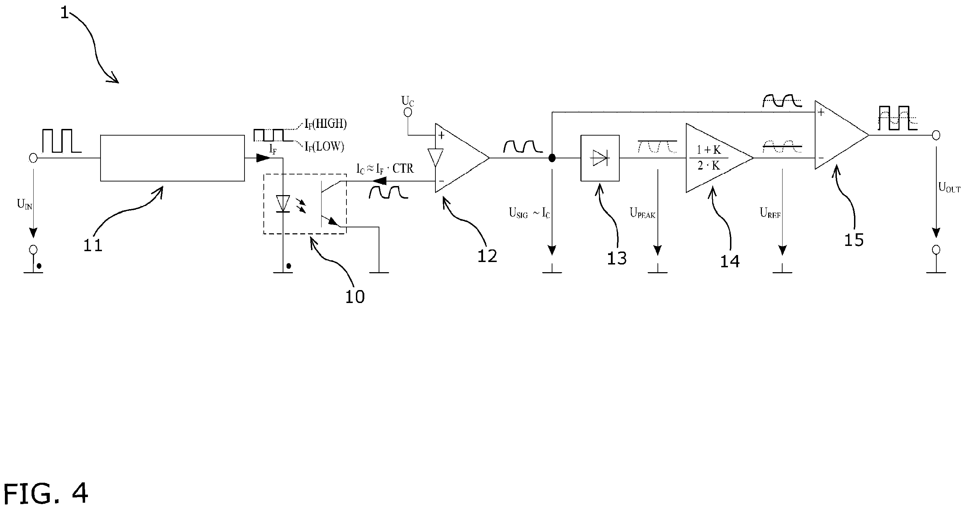

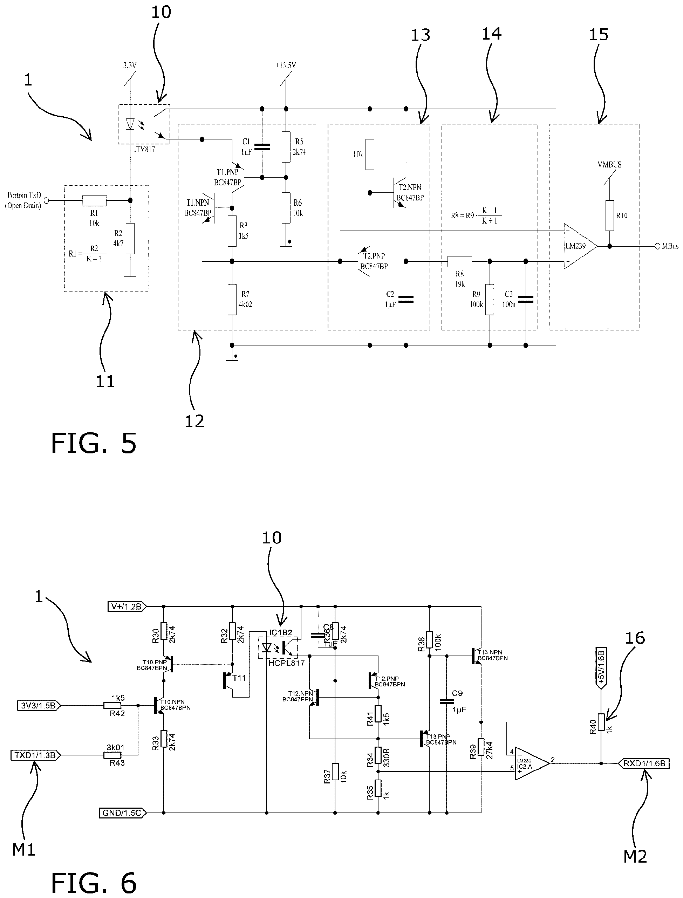

Figur 4 zeigt einen prinzipiellen Schaltungsplan einer erfindungsgemäßen Schaltungsanordnung 1 zur optischen Signalübertragung. Figur 5 zeigt einen detaillierten Schaltungsplan der erfindungsgemäßen Schaltungsanordnung 1 zur optischen Signalübertragung der Figur 4. Figur 6 zeigt den detaillierten Schaltungsplan der erfindungsgemäßen Schaltungsanordnung 1 zur optischen Signalübertragung der Figur 5 in einer anderen Darstellung.

Erfindungsgemäß kann ein kostengünstiger Optokoppler 10 verwendet werden, indem sowohl die Speisung des Optokopplers 10 von der Eingangsseite als auch die Verarbeitung des Stroms auf der Ausgangsseite derart erfolgt, dass zu günstigeren Kosten des Optokopplers 10 sowie zu günstigeren Kosten der Schaltungsanordnung 1 zur optischen Signalübertragung insgesamt eine optische Signalübertragung mit vergleichbarer oder sogar besserer Qualität erfolgen kann als mit dem Optokoppler-Bauteil SFH6345.

Dabei liegt der vorliegenden Erfindung u.a. die Erkenntnis zugrunde, dass die Geschwindigkeit der Signalübertragung von Optokopplern 1 u.a. dadurch eingeschränkt werden kann, dass Spannungsänderungen am Ausgang des Optokopplers 1 zu Umladeströmen führen. Diese werden erfindungsgemäß dadurch minimiert, indem der Ausgangsstrom $I_C$ des Optokopplers 10 einem Transimpedanzverstärker 12 zugeführt wird, dessen Eingangsspannung Uc konstant gehalten wird. Der Transimpedanzverstärker 12 gibt auf diese Weise eine zum Ausgangsstrom $I_C$ des Optokopplers 10 proportionale Ausgangsspannung $U_{SIG}$ aus. Auf diese Weise lässt sich die Geschwindigkeit eines langsameren Optokopplers 1 wesentlich erhöhen.

Die maximale Geschwindigkeit der erfindungsgemäßen Schaltungsanordnung 1 kann weiter dadurch verbessert werden, indem die LED des Optokopplers 10 nicht je nach Signalzustand ein- oder ausgeschaltet, sondern kontinuierlich bestromt wird. Lediglich die Stärke des Ausgangsstroms $I_F$ eines Optokoppler-Treibers 11 wird in Abhängigkeit von einer Eingangsspannung $U_{IN}$ der Schaltungsanordnung 1 als Eingangssignal variiert. Dadurch können zeitraubende Umladeprozesse in der LED des Optokopplers 10 und in dem Photosensor des Optokopplers 10 weiter minimiert und hierdurch die Geschwindigkeit der Signalübertragung der erfindungsgemäßen Schaltungsanordnung 1 weiter erhöht werden.

Die Flankensteilheit der auf diese Weise erzeugten Ausgangsspannung $U_{SIG}$ des Transimpedanzverstärkers 12 kann jedoch nicht ausreichend sein, sondern sehr stark der Auf-/Entladekurve eines RC-Glieds ähneln. Dieser Nachteil kann behoben werden, indem mit Hilfe einer Komparatorschaltung 15 die Ausgangsspannung $U_{SIG}$ des Transimpedanzverstärkers 12 in ein Rechtecksignal umgewandelt wird. Allerdings muss dazu ein konstantes Referenzsignal $U_{REF}$ gebildet werden, welches die Schaltschwelle der Komparatorschaltung 15 festlegt. Dieses Referenzsignal $U_{REF}$ muss möglichst genau zwischen dem unteren und dem oberen Spitzenwert der Ausgangsspannung $U_{SIG}$ der Transimpedanzverstärkers 12 liegen, um asymmetrische Verschiebungen zwischen der positiven Flanke und der negativen Flanke zu vermeiden.

Dieses Referenzsignal $U_{REF}$ ist jedoch ebenso wie die Amplitude der Ausgangsspannung $U_{SIG}$ des Transimpedanzverstärkers 12 von einem Stromübertragungsfaktor CTR (Current-Transfer-Ratio) des Optokopplers 10 abhängig. Diese Eigenschaft des Optokopplers 10 ist z.B. von Bauteilstreuungen, der Temperatur, der Lebensdauer des Bauteils und von dem Eingangsstrom $I_F$ des Optokopplers 10 abhängig. Während der Eingangsstrom $I_F$ des Optokopplers 10, d.h. der LED-Strom, mit einfachen Mitteln relativ genau eingestellt werden kann, können Bauteilstreuungen und der Einfluss der Lebensdauer nicht beeinflusst werden. Diese Toleranzen führen dazu, dass zwischen dem minimalen Stromübertragungsfaktor CTR und dem maximalen Stromübertragungsfaktor CTR der Faktor 3 bis 4 liegen kann.

Um das Referenzsignal $U_{REF}$ dennoch passend zum aktuellen Stromübertragungsfaktor CTR einstellen zu können, wird der Eingangsstrom $I_F$ des Optokopplers 10 in Abhängigkeit von der angelegten Eingangsspannung $U_{IN}$ der Schaltungsanordnung 1 so eingestellt, dass der Spitzenwert und die Signalamplitude in einem festen Verhältnis zu einander stehen. Dabei wird eine logische "1" dem maximalen Eingangsstrom $I_F$(HIGH) des Optokopplers 10 und eine logische "0" dem minimalen Eingangsstrom $I_F$(LOW) des Optokopplers 10 zugeordnet.

Dabei gilt: $I_F$(HIGH) = $I_F$(LOW) * K, wobei K ein konstanter Faktor ist. Um den Einfluss des Eingangsstrom $I_F$ des Optokopplers 10 auf den Stromübertragungsfaktor CTR gering zu halten, sollte der konstante Faktor K nicht wesentlich größer als 1 sein, da ein in bestimmten Grenzen konstanter Stromübertragungsfaktor CTR für die zuverlässige Funktion der erfindungsgemäßen Schaltungsanordnung 1 bedeutsam ist.

Durch den Einsatz eines Spitzenwertgleichrichters 13 wird je nach Verschaltung der Maximalwert oder der Minimalwert der Ausgangsspannung $U_{SIG}$ des Transimpedanzverstärkers 12 ermittelt. Da, unter Vernachlässigung dynamischer Vorgänge, ein linearer Zusammenhang zwischen dem Eingangsstrom $I_F$ des Optokopplers 10 und der Ausgangsspannung $U_{SIG}$ des Transimpedanzverstärkers 12 besteht, sind der Spitzenwert UPEAK als Ausgangsspannung UPEAK des Spitzenwertgleichrichters 13 und die Amplitude der Ausgangsspannung $U_{SIG}$ des Transimpedanzverstärkers 12 proportional zueinander, da auch der maximale Eingangsstrom $I_F$(HIGH) des Optokopplers 10 und der minimale Eingangsstrom $I_F$(LOW) des Optokopplers 10 proportional zueinander sind. Das Verhältnis von Amplitude und Spitzenwert beträgt näherungsweise 1 - 1/K.

Über ein P-Glied 14 z.B. in Form eines einfachen Spannungsteilers kann jetzt eine Ausgangsspannung $U_{REF}$ des P-Gliedes 14 als Referenzsignal $U_{REF}$ bzw. als Referenzpegel $U_{REF}$ erzeugt werden, welcher mittig zwischen dem positiven und dem negativen Spitzenwert der Ausgangsspannung $U_{SIG}$ des Transimpedanzverstärkers 12 liegt.

Über die Komparatorschaltung 15 kann nun die Ausgangsspannung $U_{SIG}$ des Transimpedanzverstärkers 12 als Signalspannung mit dem Referenzpegel $U_{REF}$ verglichen und in ein Rechtecksignal als Ausgangsspannung $U_{OUT}$ der Schaltungsanordnung 1 umgewandelt werden, welche bis auf eine zeitliche Verschiebung und einen evtl. geänderten Logikpegel der Eingangsspannung $U_{IN}$ der Schaltungsanordnung 1 entspricht. Wegen der mittigen Lage des Referenzpegels $U_{REF}$ werden die positive Flanke und die negative Flanke der Ausgangsspannung $U_{OUT}$ der Schaltungsanordnung 1 um denselben Wert verzögert, so dass die Signalform der Ausgangsspannung $U_{OUT}$ der Schaltungsanordnung 1 identisch zur Eingangsspannung $U_{IN}$ der Schaltungsanordnung 1 bleibt.

Auf diese Weise kann erfindungsgemäß eine deutliche Kostenersparnis gegenüber der Schaltungsanordnung 1 der Figur 1 erzielt werden, da die verwendeten Optokoppler 10 der erfindungsgemäßen Schaltungsanordnung 1 der Figuren 4 - 6 wesentlich preisgünstiger sind als die Hochgeschwindigkeits-Optokoppler 10 der Optokoppler-Bauteile SFH6345 der Figur 1. Auch die hinzukommenden Bauteile der erfindungsgemäßen Schaltungsanordnung 1 der Figuren 4-6 ergeben in Summe auch bei Berücksichtigung der Fertigungskosten einen wesentlich niedrigeren Gesamtpreis der erfindungsgemäßen Schaltungsanordnung 1 der Figuren 4 - 6 gegenüber der Schaltungsanordnung 1 der Figur 1.

Außerdem sind die Flanken der Ausgangsspannung $U_{OUT}$ der erfindungsgemäßen Schaltungsanordnung 1 der Figuren 4 - 6 aufgrund der nachgeschalteten Komparatorschaltung 15 steiler als bei der Schaltungsanordnung 1 der Figur 1, so dass die Ausgangsspannung $U_{OUT}$ der erfindungsgemäßen Schaltungsanordnung 1 der Figuren 4 - 6 auch bei grenzwertigen Schwellspannungen von Mikrorechner-Eingängen und ungünstigen Oszillator-Toleranzen immer noch sicher eingelesen werden kann.

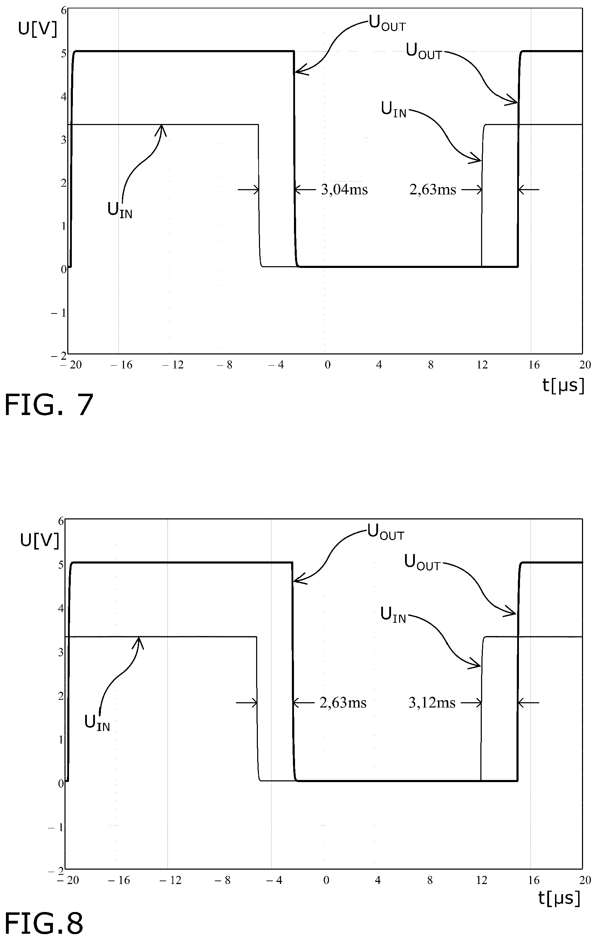

Figur 7 zeigt die Spannungsverläufe U einer Eingangsspannung $U_{IN}$ und einer Ausgangsspannung $U_{OUT}$ der erfindungsgemäßen Schaltungsanordnung 1 zur optischen Signalübertragung der Figur 6 für einen ersten Wert eines Stromübertragungsfaktors CTR über der Zeit t. Figur 8 zeigt entsprechende Spannungsverläufe U für einen zweiten Wert des Stromübertragungsfaktors CTR über der Zeit t. In beiden Fällen wird ein Optokoppler-Bauteil LTV817 als Optokoppler 10 verwendet, wobei die Bauteilvariante LTV817@D (D-Typ) der Figur 7 eine Toleranz des Stromübertragungsfaktors CTR zwischen 300% und 600% und die Bauteilvariante LTV817@B (B-Typ) der Figur 8 eine Toleranz des Stromübertragungsfaktors CTR zwischen 130% und 260% aufweist.

Im Ergebnis der beiden Messungen der Figuren 7 und 8 der erfindungsgemäßen Schaltungsanordnungen 1 zeigt sich, dass die Signale der Ausgangsspannung $U_{OUT}$ der Schaltungsanordnung 1 auch unter Berücksichtigung der stark schwankenden Stromübertragungsfaktoren CTR der verschiedenen Bauteilvarianten des Optokopplers 10 weitgehend unverändert übertragen werden. Bei dem B-Typ der Figur 8 tritt die steigende Flanke um ca. 400 ns schneller als die fallende Flanke auf. Bei dem D-Typen der Figur 7 ist die steigende Flanke der Ausgangsspannung $U_{OUT}$ der Schaltungsanordnung 1 um ca. 470 ns langsamer als die fallende Flanke der Eingangsspannung $U_{EIN}$ der Schaltungsanordnung 1.

In der ursprünglichen Schaltungsanordnung 1 der Figur 1 ist die Differenz in den Verzögerungen durch die flache Steigung der positiven Flanke der Ausgangsspannung $U_{OUT}$ der Schaltungsanordnung 1 stark von der Schaltschwelle des einlesenden Rechners abhängig. Da diese positive Flanke der Ausgangsspannung $U_{OUT}$ der Schaltungsanordnung 1 gewöhnlich zwischen 20% und 80% der Betriebsspannung liegen kann, liegt hier die Spanne für die Verzögerung der positiven Flanke bei 2,2 s. Allerdings lässt sich dieser Wert durch die Reduzierung des Pull-Up-Widerstands 16 an dem Kollektor des Optokopplers 1 auf ca. 550 ns verringern, wodurch die erfindungsgemäße Schaltungsanordnung 1 der Figuren 4 - 6 von der Verzögerungsdifferenz her mit der ursprünglichen Schaltungsanordnung 1 der Figur 1 vergleichbar ist.

**Bezugszeichenliste (Bestandteil der Beschreibung)**

| | |
|---|---|
| CTR | Stromübertragungsfaktor (Current-Transfer-Ratio) |
| $I_C$ | Ausgangsstrom des Optokopplers 10 |
| $I_F$ | Ausgangsstrom des Optokoppler-Treibers 11 bzw. Eingangsstrom des Optokopplers 10 |
| $I_F(High)$ | maximaler Ausgangsstrom $I_F$ des Optokoppler-Treibers 11 bzw. maximaler Eingangsstrom $I_F$ des Optokopplers 10 |
| $I_F(LOW)$ | minimaler Ausgangsstrom $I_F$ des Optokoppler-Treibers 11 bzw. minimaler Eingangsstrom $I_F$ des Optokopplers 10 |
| K | konstanter Faktor |
| M1 | Messpunkt der Eingangsspannung $U_{IN}$ |
| M2 | Messpunkt des Ausgangsspannung $U_{OUT}$ |
| t | Zeit, allgemein |
| $\Delta T$ | Anstiegszeit |
| U | Spannung, allgemein |
| $U_C$ | Eingangsspannung des Transimpedanzverstärkers 12 |
| $U_{IN}$ | Eingangsspannung der Schaltungsanordnung 1 |
| $U_{OUT}$ | Ausgangsspannung der Schaltungsanordnung 1 |
| $U_{PEAK}$ | Ausgangsspannung des Spitzenwertgleichrichters 13 |
| $U_{REF}$ | Referenzsignal; Referenzpegel; Ausgangsspannung des P-Glieds 14; Mittelwert der Ausgangsspannung $U_{SIG}$ des Transimpedanzverstärkers 1312 |
| $U_{SIG}$ | Ausgangsspannung des Transimpedanzverstärkers 12 |
| 1 | Schaltungsanordnung |
| 10 | Optokoppler |

11   Optokoppler-Treiber, LED-Treiber
12   Transimpedanzverstärker
13   Spitzenwertgleichrichter
14   P-Glied
15   Komparatorschaltung
16   Pull-Up-Widerstand

**Patentansprüche**

1.   Schaltungsanordnung (1) zur optischen Signalübertragung, mit
     einem Optokoppler (10), welcher ausgebildet ist, einen Eingangsstrom ($I_F$) zu erhalten und einen Ausgangsstrom ($I_C$) zu erzeugen,
     einem Transimpedanzverstärker (12), welcher ausgebildet ist, den Ausgangsstrom ($I_C$) des Optokopplers (10) zu erhalten und eine zum Ausgangsstrom ($I_C$) des Optokopplers (10) proportionale Ausgangsspannung ($U_{SIG}$) zu erzeugen,
     einem Spitzenwertgleichrichter (13), welcher ausgebildet ist, die Ausgangsspannung ($U_{SIG}$) des Transimpedanzverstärkers (12) zu erhalten und eine Ausgangsspannung ($U_{PEAK}$) zu erzeugen, welche dem Maximum oder dem Minimum der Ausgangsspannung ($U_{SIG}$) des Transimpedanzverstärkers (12) entspricht, **gekennzeichnet durch**
     ein P-Glied (14), welches ausgebildet ist, die Ausgangsspannung ($U_{PEAK}$) des Spitzenwertgleichrichters (13) zu erhalten und als Ausgangsspannung ($U_{REF}$) einen Mittelwert der Ausgangsspannung ($U_{SIG}$) des Transimpedanzverstärkers (12) zu erzeugen, und
     eine Komparatorschaltung (15), welche ausgebildet ist, die Ausgangsspannung ($U_{SIG}$) des Transimpedanzverstärkers (12) und die Ausgangsspannung ($U_{REF}$) des P-Glieds (14) zu erhalten und eine Ausgangsspannung ($U_{OUT}$) der Schaltungsanordnung (1) zu erzeugen.

2.   Schaltungsanordnung (1) nach Anspruch 1, **gekennzeichnet durch**
     einen Optokoppler-Treiber (11), welcher ausgebildet ist, den Eingangsstrom ($I_F$) des Optokopplers (10) kontinuierlich zu erzeugen.

3.   Schaltungsanordnung (1) nach Anspruch 2, **dadurch gekennzeichnet, dass**
     der Optokoppler-Treiber (11) ferner ausgebildet ist, einen maximalen Eingangsstrom ($I_F$(High)) des Optokopplers (10), welcher einer logischen 1 entspricht, und einen minimalen Eingangsstrom ($I_F$(LOW)) des Optokopplers (10), welcher einer logischen 0 entspricht, zu erzeugen.

4.   Schaltungsanordnung (1) nach Anspruch 3, **dadurch gekennzeichnet, dass**
     der Optokoppler-Treiber (11) ferner ausgebildet ist, den Eingangsstrom ($I_F$) des Optokopplers (10) derart zu erzeugen, dass der maximale Eingangsstrom ($I_F$(High)) des Optokopplers (10) in einem konstanten Verhältnis mit einem konstanten Faktor (K) zum minimalen Eingangsstrom ($I_F$(LOW)) des Optokopplers (10) steht.

5.   Schaltungsanordnung (1) nach Anspruch 1, **dadurch gekennzeichnet, dass** das P-Glied (14) ein Übertragungsverhältnis von etwa

$$1+K/(2*K)$$

     aufweist,
     wobei K ein konstanter Faktor (K) eines Optokoppler-Treibers (11) ist.

6.   Schaltungsanordnung (1) nach Anspruch 4 oder 5, **dadurch gekennzeichnet, dass**
     der konstante Faktor (K) des Optokoppler-Treibers (11) größer als 1 und kleiner als 2, vorzugsweise kleiner als 1,5, besonders vorzugsweise kleiner als 1,25, ist.

7.   Elektrisches Gerät, mit
     wenigstens einer Schaltungsanordnung (1) zur optischen Signalübertragung nach einem der Ansprüche 1 bis 6.

8.   Elektrisches Gerät nach Anspruch 7,
     wobei das elektrische Gerät ein elektrisches Haushaltsgerät ist, insbesondere:

     • ein Backofen mit Funkspieß,
     • ein Funkspieß für einen Backofen;
     • ein Dampfgarer,
     • ein Dampfgarer mit Mikrowelle,
     • ein Combi-Dampfgarer,
     • ein Combi-Dampfgarer mit Backofenfunktion,
     • ein Combi-Dampfgarer mit Funkspieß,
     • ein Funkspieß für einen Combi-Dampfgarer,
     • ein Combi-Dampfgarer mit Backofenfunktion und Funkspieß,
     • ein Funkspieß für einen Combi-Dampfgarer mit Backofenfunktion, und/oder
     • ein Einbau-Kaffeeautomat.

FIG. 1

FIG. 2

FIG. 3

FIG. 4

FIG. 5

FIG. 6

FIG. 7

FIG.8

**Europäisches Patentamt**
**European Patent Office**
**Office européen des brevets**

# EUROPÄISCHER RECHERCHENBERICHT

Nummer der Anmeldung

EP 17 20 0494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2008/118252 A1 (CHOW FUN KOK [SG] ET AL) 22. Mai 2008 (2008-05-22) <br> * Absatz [0001] - Absatz [0002] * <br> * Absatz [0015] * <br> * Absatz [0010] * <br> * Absatz [0019] - Absatz [0020] * <br> * Abbildung 5 * <br> ----- | 1-8 | INV. <br> H04B10/80 |
| Y | US 2010/213874 A1 (LEE KAH WENG [SG] ET AL) 26. August 2010 (2010-08-26) <br> * Absatz [0013] * <br> * Absatz [0017] * <br> * Absatz [0019] * <br> * Abbildungen 3-4 * <br> ----- | 1-8 | |
| Y | US 7 542 684 B2 (SHARP KK [JP]) 2. Juni 2009 (2009-06-02) <br> * Spalte 4, Zeile 3 - Zeile 13 * <br> * Spalte 10, Zeile 19 - Zeile 34 * <br> * Abbildungen 2,7 * <br> ----- | 1-8 | |
| | | | **RECHERCHIERTE SACHGEBIETE (IPC)** <br><br> H04B |

Der vorliegende Recherchenbericht wurde für alle Patentansprüche erstellt

| Recherchenort | Abschlußdatum der Recherche | Prüfer |
|---|---|---|
| München | 9. April 2018 | Inan, Beril |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 0494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2018

| Im Recherchenbericht angeführtes Patentdokument | Datum der Veröffentlichung | Mitglied(er) der Patentfamilie | Datum der Veröffentlichung |
|---|---|---|---|
| US 2008118252 A1 | 22-05-2008 | GB 2444147 A<br>JP 2008160082 A<br>US 2008118252 A1 | 28-05-2008<br>10-07-2008<br>22-05-2008 |
| US 2010213874 A1 | 26-08-2010 | DE 102010002366 A1<br>US 2010213874 A1 | 02-09-2010<br>26-08-2010 |
| US 7542684 B2 | 02-06-2009 | CN 1767385 A<br>DE 102005051825 A1<br>JP 4566692 B2<br>JP 2006128393 A<br>TW I315506 B<br>US 2006092099 A1 | 03-05-2006<br>11-05-2006<br>20-10-2010<br>18-05-2006<br>01-10-2009<br>04-05-2006 |

EPO FORM P0461

Für nähere Einzelheiten zu diesem Anhang : siehe Amtsblatt des Europäischen Patentamts, Nr.12/82